# EUROPEAN PATENT SPECIFICATION

(11) **EP 3 282 153 B1**
(45) Date of publication and mention of the grant of the patent: **06.05.2020**
(21) Application number: 17184346.9
(22) Date of filing: 01.08.2017
(51) Int. Cl.: F16J 15/34, F01D 11/00

(54) **HYDRODYNAMIC SEAL SEAT COOLING FEATURES**
KÜHLKONFIGURATIONEN FÜR HYDRODYNAMISCHEN DICHTUNGSSITZ
CARACTÉRISTIQUES DE REFROIDISSEMENT DE SIÈGE DE JOINT HYDRODYNAMIQUE

(30) Priority: 09.08.2016 US 201615232367
(43) Date of publication of application: 14.02.2018
(73) Proprietor: United Technologies Corporation, Farmington, CT 06032 (US)
(72) Inventor: KOVACIK, Ronnie K., Manchester, CT 06040 (US); WALKER, Brady, Glastonbury, CT 06033 (US)
(74) Representative: Dehns

(56) References cited:
- US-A- 2 990 202
- US-A- 4 406 460
- US-A- 4 928 978
- US-A1- 2014 119 887
- US-A1- 2016 010 477

## Description

### BACKGROUND

The present disclosure relates to hydrodynamic seals and more particularly, to cooling features in a hydrodynamic seal seat.

Hydrodynamic seals are used in various applications, including for sealing a bearing cavity, in which cooling lubricant is present, from other components of a gas turbine engine. A hydrodynamic seal includes a nonrotating seal assembly, a rotating seal seat, and a fluid bearing surface that forms between the nonrotating seal assembly and rotating seal seat to provide a seal. The fluid bearing surface (also called an air film in some application) prevents other fluids, such as oil or another cooling lubricant, from flowing through the gap between the nonrotating seal assembly and the rotating seal seat while also reducing wear on the sealing surfaces of the nonrotating seal assembly and the seal seat. Occasionally, the rotating seal seat can overcome the fluid bearing surface and contact the nonrotating seal assembly. Due to friction, such contact causes heat to be generated within the seal seat and increases the temperature of the seal seat. While attempts have been made to mitigate the heat with the introduction of cooling lubricant at a side of the seal seat opposite the side in contact with the nonrotating seal assembly, the cooling lubricant only provides localized cooling relief on the noncontacting side of the seal seat.

US 2,990,202 A1 discloses improved means for cooling rotating frictionally engaged members.

US 4,928,978 A1 discloses a seal and seal ring which form an annulus which collects weepage oil which is removed through holes.

### SUMMARY

From a first aspect, a seal seat as claimed in claim 1 is provided.

From a further aspect, a seal as claimed in claim 8 is provided.

A hydrodynamic seal in a gas turbine engine includes a seal assembly that is nonrotatable and has a housing, a carrier, a resilient member between the housing and the carrier, and a seal block attached to the carrier. The hydrodynamic seal also includes a seal seat that is annular, rotatable, and configured to attach to a rotatable shaft with the seal seat having a first side and a second side. The seal seat includes a base, a neck connected to and radially outward from the base, a head connected to and radially outward from the neck with the head having a sealing surface on the first side that is adjacent to the seal block of the seal assembly, a first notch in the neck on the second side of the seal seat, and lubricant passages extending from the first notch to an outer end of the head with each of the lubricant passages extending to a point on the outer end of the head near the sealing surface.

From a further aspect which the applicant expressly reserves the right to claim, the invention provides a hydrodynamic seal in a gas turbine engine comprising: a seal assembly that is nonrotatable and has a housing, a carrier, a resilient member between the housing and the carrier, and a seal block attached to the carrier; and a seal seat that is annular, rotatable, and configured to attach to a rotatable shaft, the seal seat having a first side and a second side, the seal seat comprising: a base; a neck connected to and radially outward from the base; a head connected to and radially outward from the neck with the head having a sealing surface on the first side that is adjacent to the seal block of the seal assembly; a first notch in the neck on the second side of the seal seat; and lubricant passages extending from the first notch to an outer end of the head, each of the lubricant passages extending to a point on the outer end of the head near the sealing surface.

Preferably, the hydrodynamic seal further comprises: a lubricant dam that is annular in shape and extends radially inward from the head into the first notch.

Preferably, the hydrodynamic seal further comprises: a second notch in the neck on the first side of the seal seat.

Preferably, each of the lubricant passages extends in at least two directions between the first notch and the outer end of the head.

### BRIEF DESCRIPTION OF THE DRAWINGS

FIG. 1A is a cross-sectional elevation view of a hydrodynamic seal.

FIG. 1B is a perspective view of a seal seat.

FIG. 2 is a cross-sectional elevation view of a second embodiment of a hydrodynamic seal.

FIG. 3 is a plan view of an embodiment of a seal seat.

FIG. 4 is a plan view of another embodiment of the seal seat.

FIG. 5 is a cross-sectional elevation view of another embodiment of a hydrodynamic seal.

### DETAILED DESCRIPTION

A hydrodynamic seal is disclosed herein that includes a seal seat with a plurality of cooling lubricant passages. The hydrodynamic seal can provide a seal to enclose a compartment, such as a bearing compartment, to prevent fluids within the compartment from escaping. The hydrodynamic seal includes a stationary seal assembly that has a seal housing, a carrier, a resilient member, and a seal block. The hydrodynamic seal also includes a rotatable seal seat configured to attach to a shaft, such as a main shaft in a gas turbine engine. The seal seat has a base, a head, and a neck between the base and the head. The neck includes a notch into which a nozzle dispenses cooling lubricant. During operation, a fluid bearing surface, such as an air film, is formed between the seal block and a sealing surface on the head, forming a seal that prevents the cooling lubricant or other fluids from flowing through while also limiting the amount of friction between the stationary seal assembly and the rotating seal seat. Occasionally, the seal seat can contact the seal block, causing heat in the seal seat due to friction between the rotating seal seat and the nonrotating seal block. To mitigate that heat, the seal seat includes a plurality of cooling lubricant passages that extend from the notch in the neck to an outer end of the head. The plurality of cooling lubricant passages allows cooling lubricant, such as oil, to flow from the notch (which is supplied with cooling lubricant by the nozzle), through the seal seat, and out corresponding openings in the head. Further, the seal seat can include a cooling lubricant dam extending radially inward from the head into the notch in the neck. The cooling lubricant dam helps prevent cooling lubricant, which can pool on a radially outer surface of the notch due to the rotation of the seal seat, from flowing out of the notch other than through the plurality of cooling lubricant passages, increasing the efficiency of the hydrodynamic seal by limiting the amount of cooling lubricant that is dispensed into the notch.

The seal seat with the plurality of cooling lubricant passages and the cooling lubricant dam has many advantages. The plurality of cooling lubricant passages allows cooling lubricant to flow through the seal seat, reducing the temperature and likelihood of damage to the seal seat. The number, orientation, and exit point of each passage of the plurality of cooling lubricant passages can be varied depending on the cooling needs of the seal seat, the material used to construct the seal seat, the manufacturing process utilized in constructing the seal seat, and other considerations. If greater cooling is needed, each passage of the plurality of cooling lubricant passages can have a longer flow length and/or the number of passages can be increased. As mentioned above, the cooling lubricant dam increases the efficiency of the hydrodynamic seal by limiting the amount of cooling lubricant that is dispensed into the notch to cool the seal seat. After reviewing the description and corresponding figures below, these and other benefits will be realized.

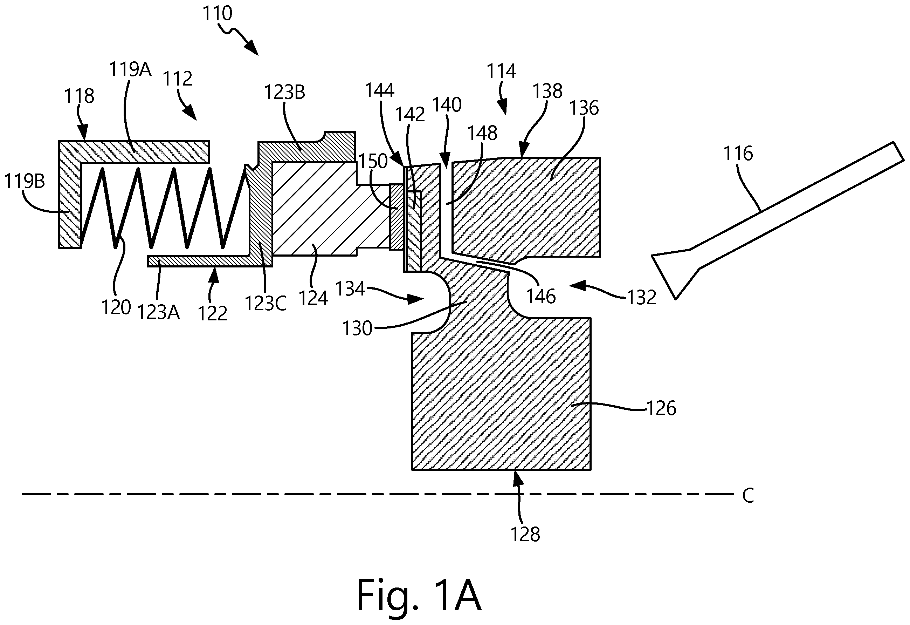

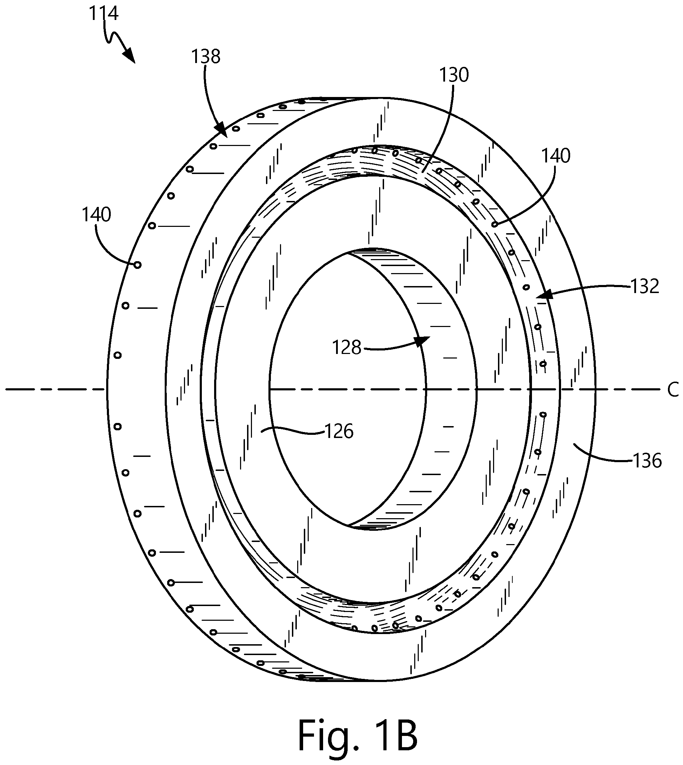

FIG. 1A is a cross-sectional elevation view of a hydrodynamic seal, and FIG. 1B is a perspective view of a seal seat. Hydrodynamic seal 110 includes seal assembly 112, seal seat 114, and nozzle 116. Seal assembly 112 includes housing 118, resilient member 120, carrier 122, and seal block 124. Seal seat 114, which is rotatable about centerline C, includes base 126 at inner end 128, neck 130 with first notch 132 and second notch 134, head 136 at outer end 138, and a plurality of cooling lubricant passages 140. Head 136 has coating 142 on sealing surface 144 with sealing surface 144 being on a first axial side of seal seat 114 adjacent to seal block 124. The plurality of cooling lubricant passages 140 have first portion 146 and second portion 148. During operation, fluid bearing surface 150 is present between seal block 124 and sealing surface 144 of head 136.

Hydrodynamic seal 110 has the same functionality as other hydrodynamic seals known in the art. Hydrodynamic seal 110 is substantially annular about centerline C, and can be centered about a rotating shaft, such as a main shaft of a gas turbine engine.

Seal assembly 112 of hydrodynamic seal 110 is stationary/nonrotating, annular, and centered about centerline C. Seal assembly 112 functions to ensure seal block 124 is adjacent to sealing surface 144 of head 136 (with fluid bearing surface 150 between seal block 124 and sealing surface 144 when hydrodynamic seal 110 is functioning properly). The configuration and functionality of seal assembly 112 is known to one of ordinary skill in the art, and the disclosed seal assembly 112 is only one exemplary embodiment.

Housing 118 of seal assembly 112 is a structural member to which resilient member 120 connects. Housing 118 is annular in shape having an outer substantially cylindrical portion 119A and arm 119B that extends inward to form a disk-like shape. Housing 118 provides a stationary and structural member to which the other components of seal assembly 112 can attach to remain stationary and nonrotating. Housing 118 can be made from a variety of materials, but should be constructed from a material that has sufficient strength and rigidity to support the other components of seal assembly 112. While housing 118 is shown in FIG. 1A as having cylindrical portion 119A and the disk-like arm 119B, housing 118 can have other configurations to provide increased strength and/or allow resilient member 120 and other components to attach thereto.

Resilient member 120 is a spring or another resilient component that is between housing 118 and carrier 122. Resilient member 120 can be annular in shape to extend completely around the annular seal assembly 112 or can be one or more individual components, such as multiple springs, that are arranged around seal assembly 112. Resilient member 120 can elongate and shorten in an axial direction to ensure seal block 124 remains adjacent to the first axial side of seal seat 114 (with fluid bearing surface 150 between seal seat 114 and seal block 124). Resilient member 120 can be made from a variety of materials, including a resilient metal, rubber, or a composite material.

Carrier 122 is connected to resilient member 120 on one axial side and to seal block 124 on the other axial side. Carrier 122 is annular in shape with inner cylindrical portion 123A, outer cylindrical portion 123B axially rear of inner cylindrical portion 123A, and disk-like arm 123C extending between an axially rearmost end of inner cylindrical portion 123A and an axially forwardmost end of outer cylindrical portion 123B. Carrier 122 can have additional components that extend in a radial outward direction away from centerline C to provide a barrier between a bearing cavity (in which cooling lubricant is present) and other components of a system in which hydrodynamic seal 110 is present, such as a gas turbine engine. Carrier 122 can be made from a variety of materials, including carbon, metal, or a composite material, and can be one continuous and monolithic piece or constructed from a number of pieces fastened together.

Seal block 124 is connected to carrier 122 and provides a seal between seal assembly 112 and seal seat 114. Seal block 124 is annular in shape and can have a square or rectangular cross-section or, as shown in FIG. 1A, have a portion adjacent seal seat 114 (i.e., adjacent to sealing surface 144 on the first axial side of seal seat 114) that has less thickness in a radial direction than a portion adjacent carrier 122. Seal block 124 can be made from a variety of materials, including carbon, metal, or a composite material, but should be constructed from a material that allows air or another fluid that forms fluid bearing surface 150 (and thus forms a seal between seal block 124 and seal seat 114) to establish a tight seal. A surface of seal block 124 adjacent fluid bearing surface 150 and seal seat 114 can be coated with a material and/or have a desired surface topography that allows for a sufficient sealing surface and promotes the air or other fluid that flows through a gap between seal block 124 and seal seat 114 to establish a tight seal.

Seal seat 114 is in an axially rearward direction from seal assembly 112 such that the first axial side of seal seat 114 is at least partially adjacent to seal block 124. Seal seat 114 is annular in shape and rotatable about centerline C. Seal seat 114 can be connected at inner end 128 to a shaft that is centered about centerline C, and the shaft can be a main shaft of a gas turbine engine or another type of engine. Further, seal seat 114 can be connected to a rotating member through other configurations, such as on an axially forward side (i.e., a first axial side) and/or on an axially rearward side (i.e., a second axial side) of base 126 of seal seat 114. While shown having base 126, neck 130, and head 136, seal seat 114 can have other configurations that function to work along with seal assembly 112 to form a hydrodynamic seal. Seal seat 114 can be constructed from multiple pieces that are fastened together, or seal seat 114 can be one continuous and monolithic component.

Base 126 of seal seat 114 is at a radially inner end 128 and provides structural support to the other components of seal seat 114. Base 126 can have a substantially rectangular cross section or another configuration, and can have features that allow base 126 to be connected to another component, such as a rotatable shaft radially inward from base 126. Base 126 can be fastened to the rotatable shaft through a variety of means, including welding, bolts, or other means. Inner end 128 of base 126 (and of seal seat 114) is substantially parallel to centerline C, but other embodiments can have an inner end that is another configuration to allow for base 126 to be connected to a shaft or another rotating structure.

Neck 130 is radially outward from base 126 and connects base 126 to head 136. Neck 130 is annular in shape and can have an axial width that is the same as base 126 and head 136 or less than an axial width of base 126 and head 136 (as shown in FIGS. 1A and 1B) to form first notch 132 and second notch 134. Neck 130 provides structural support to head 136 and can have a substantially rectangular cross section with fillets in transition areas between base 126 and neck 130 and between neck 130 and head 136 (to provide first notch 132 and second notch 134 with rounded/curved cross-sectional shapes). In other configurations, neck 130 can have another cross-sectional shape formed by first notch 132 and second notch 134.

First notch 132 is an annular aperture that extends into seal seat 114 from the second axial side towards neck 130, and second notch 134 is an annular aperture that extends into seal seat 114 from the first axial side (on an opposite side from first notch 132) towards neck 130. First notch 132 and second notch 134 reduce the mass of seal seat 114 and can be configured to balance seal seat 114 to limit vibration, coning, and other issues that can occur during rotation of seal seat 114. First notch 132 can extend into seal seat 114 a distance that is greater than, less than, or equal to the distance second notch 134 extends into seal seat 114. As shown in FIG. 1A, first notch 132 extends into seal seat 114 farther than second notch 134. Also, first notch 132 can have a radial height that is greater than, less than, or equal to a radial height of second notch 134. As shown in FIG. 1A, the radial height of first notch 132 is equal to the radial height of second notch 134. Additionally, first notch 132 can have a different radial distance from inner end 128 than a radial distance that second notch 134 is from inner end 128 (as shown in FIG. 1A), or first notch 132 and second notch 134 can be the same radial distance from inner end 128. As shown in FIG. 1A, first notch 132 is radially farther from inner end 128 than second notch 134. Other embodiments of seal seat 114 can include configurations that do not include first notch 132 and/or second notch 134.

Head 136 of seal seat 114 is at a radially outer end 138 and provides sealing surface 144 on the first axial side (i.e., forward axial side) to form a seal with seal assembly 112. Head 136 can have a substantially rectangular cross section or another configuration, and can have features that allow head 136 to more easily and completely form a seal with seal assembly 112. Head 136 can have an axial width that is the same as base 126 and neck 130, greater than base 126 and neck 130 (as shown in FIGS. 1A and 1B), or less than one or both of base 126 and neck 130. Sealing surface 144 of head 136 is adjacent to seal block 124 of seal assembly 112 with fluid bearing surface 150 between seal block 124 and head 136 when hydrodynamic seal 110 is properly operating. Sealing surface 144 can have coating 142 to provide a surface that allows for sufficient sealing and promotes the air or other fluid that flows through the gap between seal block 124 and sealing surface 144 to establish a tight seal. Coating 142 can be a variety of materials, including a hard coating or another material designed to provide a surface for establishing a seal. Further, coating 142 and/or sealing surface 144 can have a surface topography that allows for sufficient sealing. Coating 142 can cover the entire surface of sealing surface 144 or, as shown in FIG. 1A, can cover only a portion of sealing surface 144.

The plurality of cooling lubricant passages (also referred to as channels) 140 extend substantially within head 136 and partially within neck 130 from first notch 132 to outer end 138. Each passage of the plurality of cooling lubricant passages 140 include first portion 146 that extends in a substantially axial direction from first notch 132 partially into neck 130 to a transition point in head 136 and second portion 148 that extends from the transition point to a point on outer end 138 adjacent sealing surface 144 (i.e., a point near where outer end 138 intersects sealing surface 144).

First portion 146 extends from first notch 132 at a point in neck 130 that is closer to head 136 than to base 126, but other configurations can have first portion 146 that extends from first notch 132 at a point in neck 130 that is equidistant from base 126 and head 136 or closer to base 126. However, first portion 146 can extend from first notch 132 at a point near where neck 130 and head 136 intersect/connect to better promote the flow of cooling lubricant into the plurality of cooling lubricant passages 140 because cooling lubricant will be forced towards a radially outward side of first notch 132 due to the rotation of seal seat 114. First portion 146 can extend entirely in an axial direction or angle radially outward while extending in an axial direction. The angle that first portion 146 extends is between zero degrees and thirty degrees (when measured from a line that is parallel to inner end 28 and centerline C).

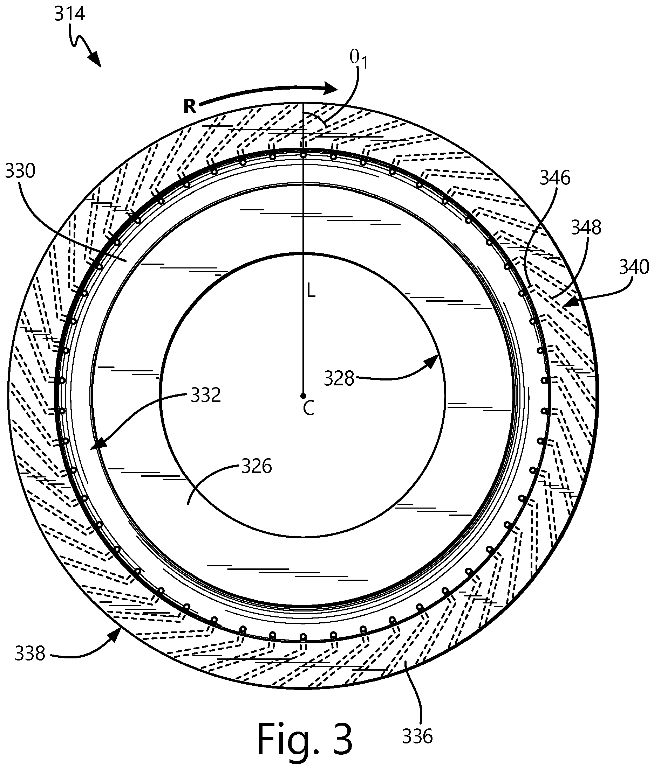

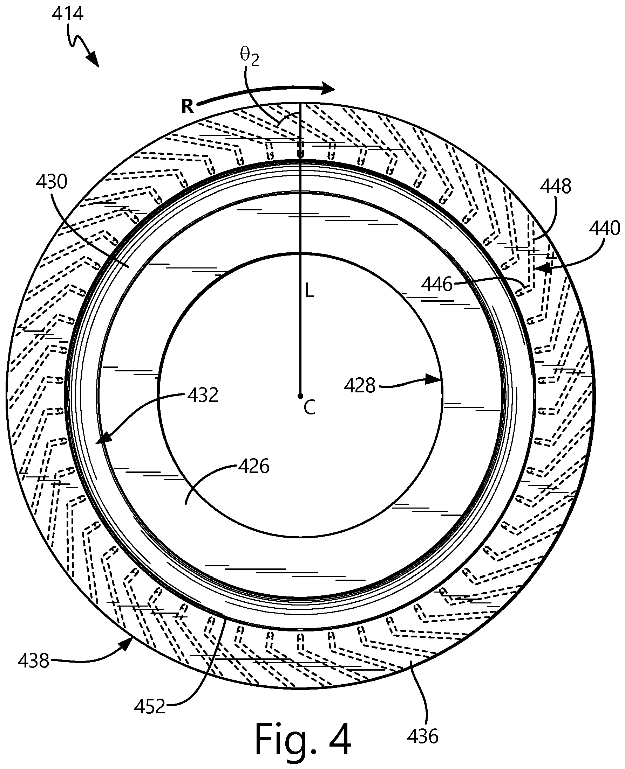

Second portion 148 extends from first portion 146 to a point on outer end 138 that is near sealing surface 144, but other configurations can have second portion 148 that extends to a point that is closer to the second axial side of head 136 (i.e., the axial rearward side of head 136 opposite sealing surface 144). Second portion 148 can extend at an angle that is entirely radial from the transition point at an end of first portion 146 to outer end 138 (as shown in FIG. 1A), angled axially forward towards the first axial side (i.e., towards sealing surface 144), or angled axially rearward towards the second axial side (i.e., away from sealing surface 144). Second portion 148 can extend to outer end 138 from the transition point at the end of first portion 146 at an angle that is entirely radial (i.e., no circumferential angle), an angle that is towards a direction of rotation of seal seat 114 (i.e., having a positive circumferential angle), or an angle that is away from a direction of rotation of seal seat 114 (i.e., having a negative circumferential angle). These different configurations will be described in greater detail with regards to FIGS. 3 and 4. The angle that second portion 148 extends is between zero degrees and ninety degrees (when measured from a line that extends in an entirely radial direction perpendicular to centerline C).

The plurality of cooling lubricant passages 140 can have any number of passages, including a configuration that includes fifty or more passages. Also, the cross-sectional flow area of each passage can have a variety of shapes, including a circular cross section, an oval cross section, a square or rectangular cross section, or another shape. The diameter of each passage of the plurality of cooling lubricant passages 140 can be a variety of sizes, including a passage that is greater than 0.152 centimeters (0.06 inches). Depending on the cooling needs of seal seat 114, the number of passages, a length of each passage, and cross-sectional flow area can be varied to provide for more cooling lubricant to flow through the plurality of cooling lubricant passages 140 and to provide for a greater surface area for heat exchange between seal seat 114 and the cooling lubricant. The configuration of each passage can vary between each passage and adjacent passages, such as a passage having a different diameter or shape than adjacent passages. A circumferential distance between adjacent passages of the plurality of cooling lubricant passages 140 can be constant (i.e., passages are equidistant from adjacent passages in a circumferential direction) such that the plurality of cooling lubricant passages 140 are equally spaced around the entire circumference of seal seat 114, or the circumferential distance between adjacent passages of the plurality of cooling lubricant passages 140 can be varied (i.e., adjacent passages are a different circumferential distance away) depending on design considerations. The plurality of cooling lubricant passages 140 can be formed through a variety of methods, including machining, additive manufacturing, electrical discharge machining, and/or electrochemical machining.

During normal operation of hydrodynamic seal 110, air or another fluid is provided into the gap between seal block 124 and sealing surface 144 of head 136 to produce fluid bearing surface 150, which seals the gap and prevent cooling lubricant and/or other fluids from flowing through the gap. However, often times during operation, seal seat 114 may temporarily move in an axial direction to contact seal block 124 (such that part of all of fluid bearing surface 150 is not present between seal block 124 and sealing surface 144 of head 136). The contact between seal block 124 and head 136 causes heat to be generated within seal block 124 and head 136 due to friction between the rotating seal seat 114 and the nonrotating seal assembly 112. If not mitigated, the heat can cause damage to head 136 and other components of seal seat 114. To prevent the buildup of heat within head 136, cooling lubricant, which is dispensed into first notch 132 by nozzle 116, is allowed to flow through the plurality of cooling lubricant passages 140 and out of seal seat 114 at outer end 138. Heat is transferred between head 136 and the cooling lubricant that is flowing through the plurality of cooling lubricant passages 140. After flowing out of the plurality of cooling lubricant passages 140, the cooling lubricant can be collected and recycled. With heat transfer occurring around the plurality of cooling lubricant passages 140 within head 136, the change in thermal gradient is smaller than if the plurality of cooling lubricant passages 140 were not present. The thermal gradient is smaller because a distance between sealing surface 144 where heat generation occurs and an area where heat transfer is taking place (around the plurality of cooling lubricant passages 140) is shorter than if heat transfer was only occurring around first notch 132 where cooling lubricant is dispensed from nozzle 116.

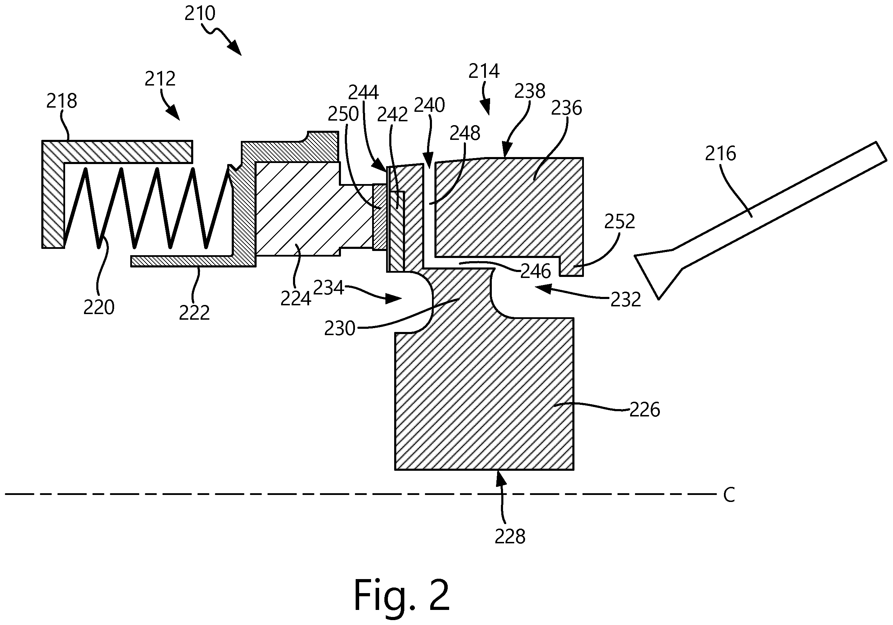

FIG. 2 is a cross-sectional elevation view of a second embodiment of a hydrodynamic seal. Hydrodynamic seal 210 includes seal assembly 212, seal seat 214, and nozzle 216. Seal assembly 212 includes housing 218, resilient member 220, carrier 222, and seal block 224. Seal seat 214, which is rotatable about centerline C, includes base 226 at inner end 228, neck 230 with first notch 232 and second notch 234, head 236 at outer end 238, a plurality of cooling lubricant passages 240, and cooling lubricant dam 252. Head 236 has coating 242 on sealing surface 244 with sealing surface 244 being on a first axial side of seal seat 214 adjacent to seal block 224. The plurality of cooling lubricant passages 240 have first portion 246 and second portion 248. During operation, fluid bearing surface 250 is present between seal block 224 and sealing surface 244 of head 236. Hydrodynamic seal 210 of FIG. 2 is similar in configuration and functionality to hydrodynamic seal 110 of FIGS. 1A and 1B, except that hydrodynamic seal 210 includes first portion 246 of the plurality of cooling lubricant passages 240 that extends entirely in an axial direction towards the first axial side and hydrodynamic seal 210 includes cooling lubricant dam 252.

First portion 246 of the plurality of cooling lubricant passages 240 extends entirely in an axially forward direction towards first axial side so that second portion 248 extends from a transition point that is closer to sealing surface 144 to promote heat transfer. Because the transition point where first portion 246 and second portion 248 meet is closer to sealing surface 244, second portion 248 extends a longer distance adjacent to sealing surface 244 than that in FIG. 1A and 1B. As with hydrodynamic seal 110 of FIGS. 1A and 1B, first portion 246 and second portion 248 can have other configurations.

Seal seat 214 includes cooling lubricant dam 252, which is annular in shape and extends radially inward from head 236 into first notch 232. Cooling lubricant dam 252 can have a rectangular cross section (as shown in FIG. 2) or another cross-sectional shape, such as triangular or semicircular. Cooling lubricant dam 252 can extend a distance into first notch that is as much as half a distance between base 226 and head 236, or a distance that is less than half the distance between base 226 and head 236, such as a distance that is approximately 0.10 centimeters (0.04 inches). Cooling lubricant dam 252 can be a spiral lock ring, one continuous and monolithic piece with head 236, or another configuration.

Cooling lubricant dam 252 helps prevent cooling lubricant within first notch 232 from flowing out of first notch 232 through an opening along the second axial side. Cooling lubricant dam 252 encourages the cooling lubricant to flow through the plurality of cooling lubricant passages 240. During operation, seal seat 214 rotates, causing the cooling lubricant to be pushed radially outward onto a radially outer surface of first notch 232 (adjacent head 236). Cooling lubricant dam 252 provides a wall for the cooling lubricant to prevent the cooling lubricant from flowing out of first notch 232 towards nozzle 216, and instead the cooling lubricant on the outer surface of first notch 232 can only flow into the plurality of cooling lubricant passages 240, decreasing the loss of cooling lubricant into areas other than the plurality of cooling lubricant passages 240 and increasing the efficiency of hydrodynamic seal 210 by increasing the proportion of cooling lubricant within first notch 232 that flows through the plurality of cooling lubricant passages 240.

FIG. 3 is a plan view of an embodiment of a seal seat. Seal seat 314 includes base 326 at inner end 328, neck 330 with first notch 332, head 336 at outer end 338, and a plurality of cooling lubricant passages 340 having first portion 346 and second portion 348. Seal seat 314 can also include a second notch and a sealing surface with a coating (not shown). During operation, seal seat 314 rotates in a direction of rotation R. Line L is a line that extends in a radial direction perpendicular to centerline C, and θ₁ is an angle measured from line L to second portion 348, with second portion 348 angled in a circumferential direction.

Seal seat 314 is similar to seal seat 114 in FIGS. 1A and 1B in configuration and functionality. However, seal seat 314 shows angle θ₁ that second portion 348 extends in the circumferential direction when measured from line L, which is a line that extends in the radial direction from centerline C. Seal seat 314 as shown in FIG. 3 has a plurality of cooling lubricant passages 340 that includes at least fifty passages, but other embodiments can include a number of the plurality of cooling lubricant passages 340 that is less than fifty passages with the passages having a larger or smaller diameter depending on design considerations.

As shown in FIG. 3, first portion 346 extends slightly radially outward as first portion 346 extends in an axially forward direction (i.e., into the page), similar to first portion 146 in FIGS. 1A and 1B. Other embodiments of seal seat 314 can include a first portion of each passage of the plurality of cooling lubricant passages 340 that does not extend slightly radially outward (extends only in an axial direction as shown in FIG. 2) or extends radially outward at a greater angle than that shown in the disclosed embodiments.

Second portion 348 extends at angle θ₁ that is between zero degrees and ninety degrees in the circumferential direction when measured from line L that extends in the radial direction from centerline L, with angle θ₁ as shown in FIG. 3 at approximately sixty degrees. Second portion 346 extends at angle θ₁ that is towards direction of rotation R of seal seat 314. With second portion 346 extending at angle θ₁ towards direction of rotation R, the cooling lubricant flowing within each passage of the plurality of cooling lubricant passages 340 will have a longer dwell time (i.e., the cooling lubricant will remain within each passage longer) than other configurations of second portion 346 because the forces caused by the rotation of seal seat 314 will push against the flowing cooling lubricant. Having a dwell time that is longer may be desired in some applications, such as when the difference in temperature between the cooling lubricant and seal seat 314 is large and less cooling lubricant is required to flow through the plurality of cooling lubricant passages 340 to cool seal seat 314.

Second portion 348 of each passage can have the same angle θ₁ as adjacent passages or can have a different angle θ₁. Additionally, first portion 346 and/or second portion 348 do not need to extend in a straight line, but rather can have one or multiple curves, zig-zags, or other configurations depending on the cooling needs of seal seat 314. Further, first portion 346 can be configured to extend at least partially in the circumferential direction, and second portion 348 can be configured to extend at least partially in the axial direction. Each passage of the plurality of cooling lubricant passages 340 can be approximately equidistant from adjacent passages in a circumferential direction, or the passages can vary in circumferential distance from one another.

FIG. 4 is a plan view of another embodiment of a seal seat. Seal seat 414 includes base 426 at inner end 428, neck 430 with first notch 432, head 436 at outer end 438, a plurality of cooling lubricant passages 440 having first portion 446 and second portion 448, and cooling lubrication dam 452. Seal seat 414 can also include a second notch and a sealing surface with a coating (not shown). During operation, seal seat 414 rotates in a direction of rotation R. Line L is a line that extends in a radial direction perpendicular to centerline C, and θ₂ is an angle measured from line L to second portion 448, with second portion 448 angled in a circumferential direction.

Seal seat 414 is similar to seal seat 114 in FIGS. 1A and 1B and seal seat 314 in FIG. 3 in configuration and functionality. However, seal seat 414 shows angle θ₂ that second portion 448 extends in the circumferential direction when measured from line L, which is a line that extends in the radial direction from centerline C, and second portion 448 of each passage of the plurality of cooling lubricant passages 440 extends at angle θ₂ that is away from direction of rotation R of seal seat 414. Seal seat 414 as shown in FIG. 4 has a plurality of cooling lubricant passages 440 that includes approximately fifty passages, but other embodiments can include a number of the plurality of cooling lubricant passages 440 that is less than fifty passages with the passages having a larger or smaller diameter depending on design considerations, or a number of the plurality of cooling lubricant passages 440 that is greater than fifty passages, such as a configuration that includes sixty or more passages.

In FIG. 4, openings of the plurality of cooling lubricant passages 440 in first notch 432 are blocked from view (and are therefore dotted lines) by cooling lubricant dam 452, which extends into first notch 432 to prevent the cooling lubricant from flowing out of first notch 432 except through the plurality of cooling lubricant passages 440. Similar to first portion 346 of the plurality of cooling lubricant passages 340 in FIG. 3, first portion 446 extends slightly radially outward as first portion 446 extends in an axially forward direction (i.e., into the page). Other embodiments of seal seat 414 can include a first portion of each passage of the plurality of cooling lubricant passages 440 that does not extend slightly radially outward (extends only in an axial direction as shown in FIG. 2) or extends radially outward at a greater angle than that shown in the disclosed embodiments.

Second portion 448 extends at angle θ₂ that is between zero degrees and ninety degrees in the circumferential direction when measured from line L that extends in the radial direction from centerline L, with angle θ₂ as shown in FIG. 4 at approximately forty-five degrees. Second portion 446 extends at angle θ₂ that is away from direction of rotation R of seal seat 414. With second portion 446 extending at angle θ₂ away from direction of rotation R, the cooling lubricant flowing within each passage of the plurality of cooling lubricant passages 440 will have a shorter dwell time (i.e., the cooling lubricant will remain within each passage for a shorter amount of time) than other configurations of second portion 446 because the forces caused by the rotation of seal seat 414 will pull the flowing cooling lubricant towards outer end 438. Having a dwell time that is shorter may be desired in some applications, such as when the difference in temperature between the cooling lubricant and seal seat 414 is small and more cooling lubricant is required to flow through the plurality of cooling lubricant passages 440 to cool seal seat 414.

As with seal seat 314 in FIG. 3, second portion 448 of each passage can have the same angle θ₂ as adjacent passages or can have a different angle θ₂. Additionally, first portion 446 and/or second portion 448 do not need to extend in a straight line, but rather can have one or multiple curves, zig-zags, or other configurations depending on the cooling needs of seal seat 314. Further, first portion 446 can be configured to extend at least partially in the circumferential direction, and second portion 448 can be configured to extend at least partially in the axial direction. Each passage of the plurality of cooling lubricant passages 440 can be approximately equidistant from adjacent passages in a circumferential direction, or the passages can vary in circumferential distance from one another.

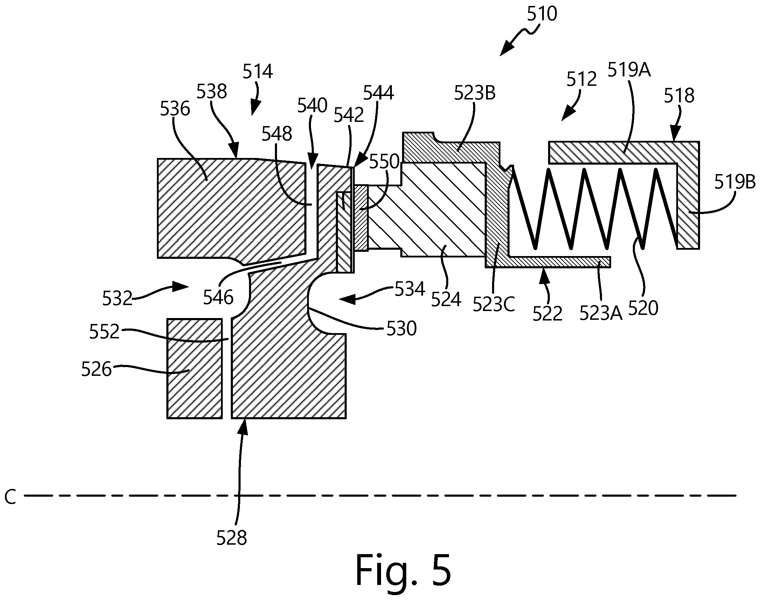

FIG. 5 is a cross-sectional elevation view of another embodiment of a hydrodynamic seal. Similar to hydrodynamic seal 110 in FIGS. 1A and 1B, hydrodynamic seal 510 includes seal assembly 512 and seal seat 514. Seal assembly 512 includes housing 518 (with cylindrical portion 519A and arm 519B), resilient member 520, carrier 122 (with inner cylindrical portion 523A, outer cylindrical portion 523B, and disk-like arm 523C), and seal block 524. Seal seat 514, which is rotatable about centerline C, includes base 526 at inner end 528, neck 530 with first notch 532 and second notch 534, head 536 at outer end 538, a plurality of cooling lubricant passages 540, and base passages 552. Head 536 has coating 542 on sealing surface 544 with sealing surface 544 being on a first axial side of seal seat 514 adjacent to seal block 524. The plurality of cooling lubricant passages 540 have first portion 546 and second portion 548. During operation, fluid bearing surface 550 is present between seal block 524 and sealing surface 544 of head 536.

Hydrodynamic seal 510 of FIG. 5 is similar in configuration and functionality to hydrodynamic seal 110 of FIGS. 1A and 1B, except that hydrodynamic seal 510 is inverse in an axial direction to hydrodynamic seal 110 (i.e., seal seat 514 is axially forward from seal assembly 512) and seal seat 514 includes base passages 552 instead of a nozzle to convey cooling lubricant from an area radially inward from inner end 528 of base 526 to first notch 532 and to the plurality of cooling lubricant passages 540.

Hydrodynamic seal 510 is configured such that seal seat 514 is axially forward from seal assembly 512. However, hydrodynamic seal 510 functions similarly as hydrodynamic seal 110 of FIGS. 1A and 1B by providing a seal (i.e., fluid bearing surface 550) between sealing surface 544 on head 536 of seal seat 514 and seal block 524 of seal assembly 512.

Seal seat 514 includes base 526 at inner end 528, head 536 at outer end 538, and neck 530 between base 526 and head 536. The configuration and functionality of seal seat 514 is similar to seal seat 114 of hydrodynamic seal 110 of FIGS. 1A and 1B, but base 526 includes base passages 552. In some configurations, the area radially inward from inner end 528 of base 526 can contain cooling lubricant, and base passages 552 convey cooling lubricant from the area radially inward of base 526 to first notch 532 and the plurality of cooling passages 540. Additionally, base passage 552 can provide cooling to base 526 by allowing heat transfer between base 526 and the cooling lubricant flowing through base passages 552.

Base passages 552 extend from inner end 528 to first notch 532, and can extend entirely in the radial direction or can angle axially forward or rearward and/or circumferentially towards or away from a direction of rotation of seal seat 514. Base passages 552 can have the same number as that of the plurality of cooling lubricant passages 540, or base passages 552 can have more or less passages than that of the plurality of cooling lubricant passages 540. Similarly, the cross-sectional flow area shape and diameter of base passages 552 can be the same or different than that of the plurality of cooling lubricant passages 540. Depending on design considerations and the amount of cooling lubricant needed, the number of passages, a length of each passage, and the cross-sectional flow area shape and diameter of base passages 552 can be sized to convey more or less cooling lubricant to first notch 532 and the plurality of cooling lubricant passages 540. The configuration of each passage of base passages 552 can vary between each passage and adjacent passages, such as a passage having a different diameter or shape than adjacent passages. A circumferential distance between adjacent passages of base passages 540 can be equal (i.e., passages are equidistant from adjacent passages in a circumferential direction) such that base passages 540 are equally spaced around the entire circumference of base 526 seal seat 114, or the circumferential distance between adjacent passages of base passages 540 can be varied (i.e., adjacent passages are a different circumferential distance away) depending on design considerations. Further, base passages 552 can have curves, zig-zags, or another configuration. Base passages 552 can be formed through a variety of methods, including machining, additive manufacturing, electrical discharge machining, and/or electrochemical machining.

Hydrodynamic seal 110/210/510 is disclosed herein that includes seal seat 114/214/314/414/514 with a plurality of cooling lubricant passages 140/240/340/440/540. Hydrodynamic seal 110/210/510 can provide a seal to enclose a compartment, such as a bearing compartment, to prevent fluids within the compartment from escaping. Hydrodynamic seal 110/210/510 includes a stationary seal assembly 112/212/512 that has housing 118/218/518, resilient member 120/220/520, carrier 122/222/522, and seal block 124/224/524. Hydrodynamic seal 110/210/510 also includes a rotatable seal seat 114/214/314/414/514 configured to attach to a shaft, such as a main shaft in a gas turbine engine. Seal seat 114/214/314/414/514 has base 126/226/326/426/526, head 136/236/336/436/536, and neck 130/230/330/430/530 between base 126/226/326/426/526 and head 136/236/336/436/536. Neck 130/230/330/430/530 includes first notch 132/232/332/432/532 on the second axial side of seal seat 114/214/314/414/514 into which nozzle 116/216 dispenses cooling lubricant. Neck 130/230/330/430/530 can also include second notch 134/234/534 on the second axial side that helps balance seal seat 114/214/314/414/514. During operation, a fluid bearing surface 150/250/550, such as an air film, is formed between seal block 124/224/524 and sealing surface 144/244/544 on head 136/236/336/436/536, forming a seal that prevents the cooling lubricant or other fluids from flowing through while also limiting the amount of friction between the stationary seal assembly 112/212/512 and the rotating seal seat 114/214/314/414/514. Occasionally, seal seat 114/214/314/414/514 can contact seal block 124/224/524, causing heat and an increase in temperature in seal seat 114/214/314/414/514 due to friction between the rotating seal seat 114/214/314/414/514 and the stationary seal block 124/224/524. To mitigate that heat, seal seat 114/214/314/414/514 includes the plurality of cooling lubricant passages 140/240/340/440/540 that extend from first notch 132/232/332/432/532 in neck 130/230/330/430/530 to outer end 138/238/338/438/538 of head 136/236/336/436/536. The plurality of cooling lubricant passages 140/240/340/440/540 allows cooling lubricant, such as oil, to flow from first notch 132/232/332/432/532 (which is supplied with cooling lubricant by nozzle 116/216), through seal seat 114/214/314/414/514, and out of head 136/236/336/436/536. Further, seal seat 114/214/314/414/514 can include cooling lubricant dam 252/452 extending radially inward from head 136/236/336/436/536 into first notch 132/232/332/432/532 in neck 130/230/330/430/530. Cooling lubricant dam 252/452 helps prevent cooling lubricant, which can pool on the radially outer surface of first notch 132/232/332/432/532 (i.e., a surface adjacent head 136/236/336/436/536) due to the rotation of seal seat 114/214/314/414/514, from flowing out of first notch 132/232/332/432/532 other than through the plurality of cooling lubricant passages 140/240/340/440/540. Cooling lubricant dam 252/452 increases the efficiency of hydrodynamic seal 110/210/510 by limiting the amount of cooling lubricant that is dispensed into first notch 132/232/332/432/532.

Seal seat 114/214/314/414/514 with the plurality of cooling lubricant passages 140/240/340/440/540 and cooling lubricant dam 252/452 has many advantages. The plurality of cooling lubricant passages 140/240/340/440/540 allows cooling lubricant to flow through seal seat 114/214/314/414/514, reducing the temperature and likelihood of damage to seal seat 114/214/314/414/514. The number, orientation, and exit point of each passages of the plurality of cooling lubricant passages 140/240/340/440/540 can be varied depending on the cooling needs of seal seat 114/214/314/414/514, the material used to construct seal seat 114/214/314/414/514, the manufacturing process utilized in constructing seal seat 114/214/314/414/514, and other considerations. If greater cooling is needed, each passage of the plurality of cooling lubricant passages 140/240/340/440/540 can have a longer flow length and/or the number of passages can be increased. As mentioned above, cooling lubricant dam 252/452 increases the efficiency of hydrodynamic seal 110/210/510 by limiting the amount of cooling lubricant that is dispensed into first notch 132/232/332/432/532 to cool seal seat 114/214/314/414/514.

While the invention has been described with reference to an exemplary embodiment(s), it will be understood by those skilled in the art that various changes may be made and equivalents may be substituted for elements thereof without departing from the scope of the invention. In addition, many modifications may be made to adapt a particular situation or material to the teachings of the invention without departing from the essential scope thereof. Therefore, it is intended that the invention not be limited to the particular embodiment(s) disclosed, but that the invention will include all embodiments falling within the scope of the appended claims.

## Claims

1. A seal seat (114; 214; 314; 414; 514) comprising:
abase (126; 226; 326; 426; 526) having an annular shape;
a neck (130; 230; 330; 430; 530) having an annular shape and being radially outward from the base (126; 226; 326; 426; 526), the neck (130; 230; 330; 430; 530) having an axial length that is less than an axial length of the base (126; 226; 326; 426; 526);
a head (136; 236; 336; 436; 536) having an annular shape and being radially outward from the neck (130; 230; 330; 430; 530), the head (136; 236; 336; 436; 536) having and outer end (138; 238; 338; 438; 538), a sealing surface (144; 244; 544), and an axial length that is greater than the axial length of the neck (130; 230; 330; 430; 530);
a notch (132; 232; 332; 432; 532) adjacent to the neck (130; 230; 330; 430; 530) formed by the base (126; 226; 326; 426; 526), neck (130; 230; 330; 430; 530), and head (136; 236; 336; 436; 536); and
a plurality of cooling lubricant passages (140; 240; 340; 440; 540) with each passage of the plurality of cooling lubricant passages (140; 240; 340; 440; 540) extending from the notch (132; 232; 332; 432; 532) to a point on the outer end (138; 238; 338; 438; 538) of the head (136; 236; 336; 436; 536), the plurality of cooling lubricant passages (140; 240; 340; 440; 540) configured to allow cooling lubricant to flow from the notch (132; 232; 332; 432; 532) to the outer end (138; 238; 338; 438; 538) of the head (136; 236; 336; 436; 536),
**characterised in that** each passage of the plurality of cooling lubricant passages (140; 240; 340; 440; 540) further comprises:
a first portion (146; 246; 346; 446; 546) that extends from the notch (132; 232; 332; 432; 532) to a transition point within the head (136; 236; 336; 436; 536); and
a second portion (148; 248; 348; 448; 548) that extends from the transition point within the head (136; 236; 336; 436; 536) to the point on the outer end (138; 238; 338; 438; 538) of the head (136; 236; 336; 436; 536),
wherein the first portion (146; 246; 346; 446; 546) extends at an angle that is between zero degrees and thirty degrees in an axial direction when measured from a line that is parallel to an inner end of the base (126; 226; 326; 426; 526), and
wherein the second portion (148; 248; 348; 448; 548) extends at an angle that is between zero degrees and ninety degrees in the circumferential direction when measured from a line that extends in a radial direction.

2. The seal seat (114; 214; 314; 414; 514) of claim 1, wherein the seal seat (114; 214; 314; 414; 514) is rotatable about a centerline and the second portion (148; 248; 348; 448; 548) of each passage of the plurality of cooling lubricant passages (140; 240; 340; 440; 540) extends at an angle that is towards a direction of rotation of the seal seat (114; 214; 314; 414; 514).

3. The seal seat (114; 214; 314; 414; 514) of claim 1, wherein the seal seat (114; 214; 314; 414; 514) is rotatable about a centerline and the second portion (148; 248; 348; 448; 548) of each passage of the plurality of cooling lubricant passages (140; 240; 340; 440; 540) extends at an angle that is away from a direction of rotation of the seal seat (114; 214; 314; 414; 514).

4. The seal seat (114; 214; 314; 414; 514) of any preceding claim, wherein the plurality of cooling lubricant passages (140; 240; 340; 440; 540) includes at least two passages.

5. The seal seat (114; 214; 314; 414; 514) of any preceding claim, wherein each passage of the plurality of cooling lubricant passages (140; 240; 340; 440; 540) is approximately equidistant from adjacent cooling lubricant passages in a circumferential direction.

6. The seal seat (114; 214; 314; 414; 514) of any preceding claim, further comprising:
a cooling lubricant dam (252; 452) that extends radially inward from the head into the notch (132; 232; 332; 432; 532), the cooling lubricant dam (252; 452) configured to prevent cooling lubricant within the notch (132; 232; 332; 432; 532) from flowing out of the notch (132; 232; 332; 432; 532).

7. The seal seat of any preceding claim, further comprising:
base passages extending through the base from an inner end of the base (126; 226; 326; 426; 526) to the notch (132; 232; 332; 432; 532), the base passages configured to allow cooling lubricant to flow through the base (126; 226; 326; 426; 526) to the notch (132; 232; 332; 432; 532).

8. A seal comprising:
a nonrotatable seal assembly; and
a rotatable seal seat (114; 214; 314; 414; 514) as claimed in any of claims 1 to 7, the seal seat (114; 214; 314; 414; 514) being annular and having a radially inner end, a radially outer end, the sealing surface (144; 244; 544) on an axially first side adjacent to the seal assembly, the notch (132; 232; 332; 432; 532) in an axially second side, and the cooling lubricant passages extending from the notch (132; 232; 332; 432; 532) to the radially outer end.

9. The seal of claim 8, further comprising:
a nozzle configured to convey cooling lubricant to the notch (132; 232; 332; 432; 532) and the cooling lubricant passages.

10. The seal of claim 8 or 9, further comprising:
base passages (552) extending from the radially inner end of the rotatable seal seat to the notch (132; 232; 332; 432; 532), the base passages (552) configured to convey cooling lubricant to the notch (132; 232; 332; 432; 532) and the cooling lubricant passages

11. The seal of claim 8, 9 or 10, wherein each of the cooling lubricant passages extends from the notch (132; 232; 332; 432; 532) to a point on the radially outer end that is adjacent to the sealing surface (144; 244; 544).

12. The seal of any of claims 8 to 11, wherein each of the cooling lubricant passages has the first portion (246; 346; 446; 546) extending from the notch (132; 232; 332; 432; 532) substantially towards the axial first side and the second portion (148; 248; 348; 448; 548) extending from the first portion to the radially outer end.

## Patentansprüche

1. Dichtungssitz (114; 214; 314; 414; 514), umfassend:
eine Basis (126; 226; 326; 426; 526) mit einer ringförmigen Form;
einen Hals (130; 230; 330; 430; 530) mit einer ringförmigen Form und von der Basis (126; 226; 326; 426; 526) radial nach außen verlaufend, wobei der Hals (130; 230; 330; 430; 530) eine axiale Länge aufweist, die kleiner als eine axiale Länge der Basis (126; 226; 326; 426; 526) ist;
einen Kopf (136; 236; 336; 436; 536) mit einer ringförmigen Form und von dem Hals (130; 230; 330; 430; 530) radial nach außen verlaufend, wobei der Kopf (136; 236; 336; 436; 536) ein äußeres Ende (138; 238; 338; 438; 538), eine abdichtende Fläche (144; 244; 544) und eine axiale Länge, die größer als die axiale Länge des Halses (130; 230; 330; 430; 530) ist, aufweist;
eine Aussparung (132; 232; 332; 432; 532) neben dem Hals (130; 230; 330; 430; 530), gebildet durch die Basis (126; 226; 326; 426; 526), den Hals (130; 230; 330; 430; 530) und den Kopf (136; 236; 336; 436; 536); und
eine Vielzahl von Kühlschmierstoffkanälen (140; 240; 340; 440; 540), wobei jeder Kanal aus der Vielzahl von Kühlschmierstoffkanälen (140; 240; 340; 440; 540) von der Aussparung (132; 232; 332; 432; 532) zu einem Punkt an dem äußeren Ende (138; 238; 338; 438; 538) des Kopfs (136; 236; 336; 436; 536) verläuft, wobei die Vielzahl von Kühlschmierstoffkanälen (140; 240; 340; 440; 540) dazu konfiguriert ist, es Kühlschmierstoff zu ermöglichen, von der Aussparung (132; 232; 332; 432; 532) zu dem äußeren Ende (138; 238; 338; 438; 538) des Kopfs (136; 236; 336; 436; 536) zu strömen, **dadurch gekennzeichnet, dass** jeder Kanal aus der Vielzahl von Kühlschmierstoffkanälen (140; 240; 340; 440; 540) ferner Folgendes umfasst:
einen ersten Abschnitt (146; 246; 346; 446; 546), der von der Aussparung (132; 232; 332; 432; 532) zu einem Übergangspunkt innerhalb des Kopfs (136; 236; 336; 436; 536) verläuft; und
einen zweiten Abschnitt (148; 248; 348; 448; 548), der von dem Übergangspunkt innerhalb des Kopfs (136; 236; 336; 436; 536) zu dem Punkt an dem äußeren Ende (138; 238; 338; 438; 538) des Kopfs (136; 236; 336; 436; 536) verläuft,
wobei der erste Abschnitt (146; 246; 346; 446; 546) in einem Winkel verläuft, der zwischen null Grad und dreißig Grad in einer axialen Richtung liegt, wenn von einer Linie gemessen, die zu einem inneren Ende der Basis (126; 226; 326; 426; 526) parallel ist, und
wobei der zweite Abschnitt (148; 248; 348; 448; 548) in einem Winkel verläuft, der zwischen null Grad und neunzig Grad in der Umfangsrichtung liegt, wenn von einer Linie gemessen, die in einer radialen Richtung verläuft.

2. Dichtungssitz (114; 214; 314; 414; 514) nach Anspruch 1, wobei der Dichtungssitz (114; 214; 314; 414; 514) um eine Mittellinie drehbar ist und der zweite Abschnitt (148; 248; 348; 448; 548) jedes Kanals aus der Vielzahl von Kühlschmierstoffkanälen (140; 240; 340; 440; 540) in einem Winkel verläuft, der in einer Drehrichtung des Dichtungssitzes (114; 214; 314; 414; 514) gebildet ist.

3. Dichtungssitz (114; 214; 314; 414; 514) nach Anspruch 1, wobei der Dichtungssitz (114; 214; 314; 414; 514) um eine Mittellinie drehbar ist und der zweite Abschnitt (148; 248; 348; 448; 548) jedes Kanals aus der Vielzahl von Kühlschmierstoffkanälen (140; 240; 340; 440; 540) in einem Winkel verläuft, der von einer Drehrichtung des Dichtungssitzes (114; 214; 314; 414; 514) weg gebildet ist.

4. Dichtungssitz (114; 214; 314; 414; 514) nach einem der vorhergehenden Ansprüche, wobei die Vielzahl von Kühlschmierstoffkanälen (140; 240; 340; 440; 540) zumindest zwei Kanäle beinhaltet.

5. Dichtungssitz (114; 214; 314; 414; 514) nach einem der vorhergehenden Ansprüche, wobei jeder Kanal aus der Vielzahl von Kühlschmierstoffkanälen (140; 240; 340; 440; 540) von benachbarten Kühlschmierstoffkanälen in einer Umfangsrichtung etwa gleichweit entfernt ist.

6. Dichtungssitz (114; 214; 314; 414; 514) nach einem der vorhergehenden Ansprüche, ferner umfassend:
einen Kühlschmierstoffdamm (252; 452), der von dem Kopf radial nach innen in die Aussparung (132; 232; 332; 432; 532) verläuft, wobei der Kühlschmierstoffdamm (252; 452) dazu konfiguriert ist, zu verhindern, dass Kühlschmierstoff innerhalb der Aussparung (132; 232; 332; 432; 532) aus der Aussparung (132; 232; 332; 432; 532) herausströmt.

7. Dichtungssitz nach einem der vorhergehenden Ansprüche, ferner umfassend:
Basiskanäle, die durch die Basis von einem inneren Ende der Basis (126; 226; 326; 426; 526) zu der Aussparung (132; 232; 332; 432; 532) verlaufen, wobei die Basiskanäle dazu konfiguriert sind, es zu ermöglichen, dass Kühlschmierstoff durch die Basis (126; 226; 326; 426; 526) zu der Aussparung (132; 232; 332; 432; 532) strömt.

8. Dichtung, umfassend:
eine nichtdrehbare Dichtungsanordnung; und
einen drehbaren Dichtungssitz (114; 214; 314; 414; 514) nach einem der Ansprüche 1 bis 7, wobei der Dichtungssitz (114; 214; 314; 414; 514) ringförmig ist und ein radiales inneres Ende, ein radiales äußeres Ende, die Dichtungsfläche (144; 244; 544) an einer axialen ersten Seite neben der Dichtungsanordnung, die Aussparung (132; 232; 332; 432; 532) an einer axialen zweiten Seite und die Kühlschmierstoffkanäle, die von der Aussparung (132; 232; 332; 432; 532) zu dem radialen äußeren Ende verlaufen, umfasst.

9. Dichtung nach Anspruch 8, ferner umfassend:
eine Düse, die dazu konfiguriert ist, Kühlschmierstoff zu der Aussparung (132; 232; 332; 432; 532) und den Kühlschmierstoffkanälen zu befördern.

10. Dichtung nach Anspruch 8 oder 9, ferner umfassend:
Basiskanäle (552), die von dem radialen inneren Ende des drehbaren Dichtungssitzes zu der Aussparung (132; 232; 332; 432; 532) verlaufen, wobei die Basiskanäle (552) dazu konfiguriert sind, Kühlschmierstoff zu der Aussparung (132; 232; 332; 432; 532) und den Kühlschmierstoffkanälen zu befördern.

11. Dichtung nach Anspruch 8, 9 oder 10, wobei jeder der Kühlschmierstoffkanäle von der Aussparung (132; 232; 332; 432; 532) zu einem Punkt an dem radialen äußeren Ende, das sich neben der Dichtungsfläche (144; 244; 544) befindet, verläuft.

12. Dichtung nach einem der Ansprüche 8 bis 11, wobei bei jedem der Kühlschmierstoffkanäle der erste Abschnitt (246; 346; 446; 546) von der Aussparung (132; 232; 332; 432; 532) im Wesentlichen hin zu der axialen ersten Seite verläuft und der zweite Abschnitt (148; 248; 348; 448; 548) von dem ersten Abschnitt zu dem radialen äußeren Ende verläuft.

## Revendications

1. Siège de joint (114 ; 214 ; 314 ; 414 ; 514) comprenant :
une base (126 ; 226 ; 326 ; 426 ; 526) ayant une forme annulaire ;
un col (130 ; 230 ; 330 ; 430 ; 530) ayant une forme annulaire et étant radialement vers l'extérieur depuis la base (126 ; 226 ; 326 ; 426 ; 526), le col (130 ; 230 ; 330 ; 430 ; 530) ayant une longueur axiale qui est inférieure à une longueur axiale de la base (126 ; 226 ; 326 ; 426 ; 526) ;
une tête (136 ; 236 ; 336 ; 436 ; 536) ayant une forme annulaire et étant radialement extérieure depuis le col (130 ; 230 ; 330 ; 430 ; 530), la tête (136 ; 236 ; 336 ; 436 ; 536) ayant une extrémité extérieure (138 ; 238 ; 338 ; 438 ; 538), une surface d'étanchéité (144 ; 244 ; 544) et une longueur axiale qui est supérieure à la longueur axiale du col (130 ; 230 ; 330 ; 430 ; 530) ;
une encoche (132 ; 232 ; 332 ; 432 ; 532) adjacente au col (130 ; 230 ; 330 ; 430 ; 530) formée par la base (126 ; 226 ; 326 ; 426 ; 526), le col (130 ; 230 ; 330 ; 430 ; 530) et la tête (136 ; 236 ; 336 ; 436 ; 536) ; et
une pluralité de passages de lubrifiant de refroidissement (140 ; 240 ; 340 ; 440 ; 540), chaque passage de la pluralité de passages de lubrifiant de refroidissement (140 ; 240 ; 340 ; 440 ; 540) s'étendant depuis l'encoche (132 ; 232 ; 332 ; 432 ; 532) jusqu'à un point sur l'extrémité extérieure (138 ; 238 ; 338 ; 438 ; 538) de la tête (136 ; 236 ; 336 ; 436 ; 536), la pluralité de passages de lubrifiant de refroidissement (140 ; 240 ; 340 ; 440 ; 540) étant configurés pour permettre au lubrifiant de refroidissement de s'écouler depuis l'encoche (132 ; 232 ; 332 ; 432 ; 532) vers l'extrémité extérieure (138 ; 238 ; 338 ; 438 ; 538) de la tête (136 ; 236 ; 336 ; 436 ; 536),
**caractérisé en ce que**
chaque passage de la pluralité de passages de lubrifiant de refroidissement (140 ; 240 ; 340 ; 440 ; 540) comprend en outre :
une première partie (146 ; 246 ; 346 ; 446 ; 546) qui s'étend depuis l'encoche (132 ; 232 ; 332 ; 432 ; 532) jusqu'à un point de transition à l'intérieur de la tête (136 ; 236 ; 336 ; 436 ; 536) ; et
une seconde partie (148 ; 248 ; 348 ; 448 ; 548) qui s'étend depuis le point de transition à l'intérieur de la tête (136 ; 236 ; 336 ; 436 ; 536) jusqu'au point sur l'extrémité extérieure (138 ; 238 ; 338 ; 438 ; 538) de la tête (136 ; 236 ; 336 ; 436 ; 536),
dans lequel la première partie (146 ; 246 ; 346 ; 446 ; 546) s'étend selon un angle qui est compris entre zéro degré et trente degrés dans une direction axiale lorsqu'il est mesuré depuis une ligne parallèle à une extrémité intérieure de la base (126 ; 226 ; 326 ; 426 ; 526), et
dans lequel la seconde partie (148 ; 248 ; 348 ; 448 ; 548) s'étend selon un angle qui est compris entre zéro degré et quatre-vingt-dix degrés dans la direction circonférentielle lorsqu'il est mesuré depuis une ligne qui s'étend dans une direction radiale.

2. Siège de joint (114 ; 214 ; 314 ; 414 ; 514) selon la revendication 1, dans lequel le siège de joint (114 ; 214 ; 314 ; 414 ; 514) peut tourner autour d'une ligne centrale et la seconde partie (148 ; 248 ; 348 ; 448 ; 548) de chaque passage de la pluralité de passages de lubrifiant de refroidissement (140 ; 240 ; 340 ; 440 ; 540) s'étend selon un angle qui est situé vers une direction de rotation du siège de joint (114 ; 214 ; 314 ; 414 ; 514).

3. Siège de joint (114 ; 214 ; 314 ; 414 ; 514) selon la revendication 1, dans lequel le siège de joint (114 ; 214 ; 314 ; 414 ; 514) peut tourner autour d'une ligne centrale et la seconde partie (148 ; 248 ; 348 ; 448 ; 548) de chaque passage de la pluralité de passages de lubrifiant de refroidissement (140 ; 240 ; 340 ; 440 ; 540) s'étend selon un angle qui est situé à distance d'une direction de rotation du siège de joint (114 ; 214 ; 314 ; 414 ; 514).

4. Siège de joint (114 ; 214 ; 314 ; 414 ; 514) selon une quelconque revendication précédente, dans lequel la pluralité de passages de lubrifiant de refroidissement (140 ; 240 ; 340 ; 440 ; 540) comporte au moins deux passages.

5. Siège de joint (114 ; 214 ; 314 ; 414 ; 514) selon une quelconque revendication précédente, dans lequel chaque passage de la pluralité de passages de lubrifiant de refroidissement (140 ; 240 ; 340 ; 440 ; 540) est approximativement équidistant des passages de lubrifiant de refroidissement adjacents dans une direction circonférentielle.

6. Siège de joint (114 ; 214 ; 314 ; 414 ; 514) selon une quelconque revendication précédente, comprenant en outre :
un barrage de lubrifiant de refroidissement (252 ; 452) qui s'étend radialement vers l'intérieur depuis la tête dans l'encoche (132 ; 232 ; 332 ; 432 ; 532), le barrage de lubrifiant de refroidissement (252 ; 452) étant configuré pour empêcher le lubrifiant de refroidissement à l'intérieur de l'encoche (132 ; 232 ; 332 ; 432 ; 532) de s'écouler hors de l'encoche (132 ; 232 ; 332 ; 432 ; 532).

7. Siège de joint selon une quelconque revendication précédente, comprenant en outre :
des passages de base s'étendant à travers la base depuis une extrémité intérieure de la base (126 ; 226 ; 326 ; 426 ; 526) jusqu'à l'encoche (132 ; 232 ; 332 ; 432 ; 532), les passages de base étant configurés pour permettre au lubrifiant de refroidissement de s'écouler à travers la base (126 ; 226 ; 326 ; 426 ; 526) vers l'encoche (132 ; 232 ; 332 ; 432 ; 532).

8. Joint comprenant :
un ensemble de joint non rotatif ; et
un siège de joint rotatif (114 ; 214 ; 314 ; 414 ; 514) selon l'une quelconque des revendications 1 à 7, le siège de joint (114 ; 214 ; 314 ; 414 ; 514) étant annulaire et ayant une extrémité radialement intérieure, une extrémité radialement extérieure, la surface d'étanchéité (144 ; 244 ; 544) sur un premier côté axialement adjacent à l'ensemble d'étanchéité, l'encoche (132 ; 232 ; 332 ; 432 ; 532) dans un second côté axial, et les passages de lubrifiant de refroidissement s'étendant depuis l'encoche (132 ; 232 ; 332 ; 432 ; 532) vers l'extrémité radialement extérieure.

9. Joint selon la revendication 8, comprenant en outre :
une buse configurée pour transporter du lubrifiant de refroidissement vers l'encoche (132 ; 232 ; 332 ; 432 ; 532) et les passages de lubrifiant de refroidissement.

10. Joint selon la revendication 8 ou 9, comprenant en outre :
des passages de base (552) s'étendant depuis l'extrémité radialement intérieure du siège de joint rotatif vers l'encoche (132 ; 232 ; 332 ; 432 ; 532), les passages de base (552) étant configurés pour transmettre le lubrifiant de refroidissement vers l'encoche (132 ; 232 ; 332 ; 432 ; 532) et les passages de lubrifiant de refroidissement.

11. Joint selon la revendication 8, 9 ou 10, dans lequel chacun des passages de lubrifiant de refroidissement s'étend depuis l'encoche (132 ; 232 ; 332 ; 432 ; 532) jusqu'à un point sur l'extrémité radialement extérieure qui est adjacent à la surface d'étanchéité (144 ; 244 ; 544).

12. Joint selon l'une quelconque des revendications 8 à 11, dans lequel chacun des passages de lubrifiant de refroidissement a la première partie (246 ; 346 ; 446 ; 546) s'étendant depuis l'encoche (132 ; 232 ; 332 ; 432 ; 532) sensiblement vers le premier côté axial et la seconde partie (148 ; 248 ; 348 ; 448 ; 548) s'étendant depuis la première partie vers l'extrémité radialement extérieure.
